# EUROPEAN PATENT SPECIFICATION

(11) **EP 3 351 734 B1**
(45) Date of publication and mention of the grant of the patent: **13.05.2020**
(21) Application number: 18152385.3
(22) Date of filing: 18.01.2018
(51) Int. Cl.: F01D 5/30, F01D 5/28

(54) **FAN BLADE WITH ANODE AND METHOD FOR GALVANIC CORROSION MITIGATION**
GEBLÄSESCHAUFEL MIT ANODE UND VERFAHREN ZUR MINDERUNG VON GALVANISCHER KORROSION
PALE DE VENTILATEUR AVEC ANODE ET PROCÉDÉ D'ATTÉNUATION DE LA CORROSION GALVANIQUE

(30) Priority: 18.01.2017 US 201715408882
(43) Date of publication of application: 25.07.2018
(73) Proprietor: United Technologies Corporation, Farmington, CT 06032 (US)
(72) Inventor: MURDOCK, James R., Tolland, CT Connecticut 06084 (US); MOFFITT, James H., Manchester, CT Connecticut 06040 (US); WEBB, Scot A., Gales Ferry, CT Connecticut 06335 (US); ABRAHAM, Jay Thomas, South Glastonbury, CT Connecticut 06073 (US); KIREJCZYK, Maria C., Middletown, CT Connecticut 06457 (US)
(74) Representative: Dehns

(56) References cited:
- WO-A1-2014/137448
- WO-A1-2015/047752
- WO-A1-2015/047756
- WO-A2-2015/069335

## Description

### BACKGROUND

Exemplary embodiments of the present disclosure are directed to a fan blade for a gas turbine engine and methods for mitigating galvanic corrosion of the fan blade.

A gas turbine fan blade may be made out of aluminum, and to protect the leading edge from erosion, a titanium sheath is attached. Titanium and aluminum are galvanically incompatible materials, so they are isolated from each other as best possible, using non-conductive materials. However and in the event the isolation between them is defeated, galvanic corrosion could occur to the blade. In particular and in an aluminum/titanium coupling, with aluminum being the less noble element, the blade would become the anode in the galvanic couple and accordingly, corrosion may occur on the aluminum blade.

Accordingly, it is desirable to provide a fan blade with a sacrificial anode as a method of mitigating galvanic corrosion of the fan blade. WO 2015/047756 A1 discloses a blade according to the preamble of claim 1.

### BRIEF DESCRIPTION

According to a first aspect of the invention, a fan blade for a gas turbine engine according to claim 1 is provided.

The first material may be aluminum.

The second material may be titanium.

The third material may be zinc or magnesium.

The first material may be aluminum, the second material may be titanium and the third material may be zinc.

The first material may be aluminum, the second material may be titanium and the third material may be magnesium or zinc and wherein optionally the non-conductive material may be an epoxy adhesive.

The first material may be aluminum, the second material may be titanium and the third material may be magnesium.

In another embodiment, a gas turbine engine according to claim 8 is provided.

According to a second aspect of the invention, a method of protecting a fan blade of a gas turbine engine from corrosion according to claim 9 is provided.

### BRIEF DESCRIPTION OF THE DRAWINGS

The following descriptions should not be considered limiting in any way. With reference to the accompanying drawings, like elements are numbered alike:
FIG. 1 is a partial cross sectional view of a gas turbine engine;
FIG. 2 is a perspective view of a fan blade in accordance with an embodiment of the invention;
FIG. 2A is a partial cross-sectional view along lines 2A-2A of FIG. 2;
FIG. 3A is a partial cross-sectional view along lines 3-3 of FIG. 2 illustrating a fan blade in accordance with said embodiment;
FIG. 3B is a partial cross-sectional view along lines 3-3 of FIG. 2 illustrating a fan blade in accordance with another embodiment; and
FIG. 3C is a partial cross-sectional view along lines 3-3 of FIG. 2 illustrating a fan blade in accordance with yet another embodiment.

### DETAILED DESCRIPTION

A detailed description of one or more embodiments of the disclosed apparatus and method are presented herein by way of exemplification and not limitation with reference to the Figures.

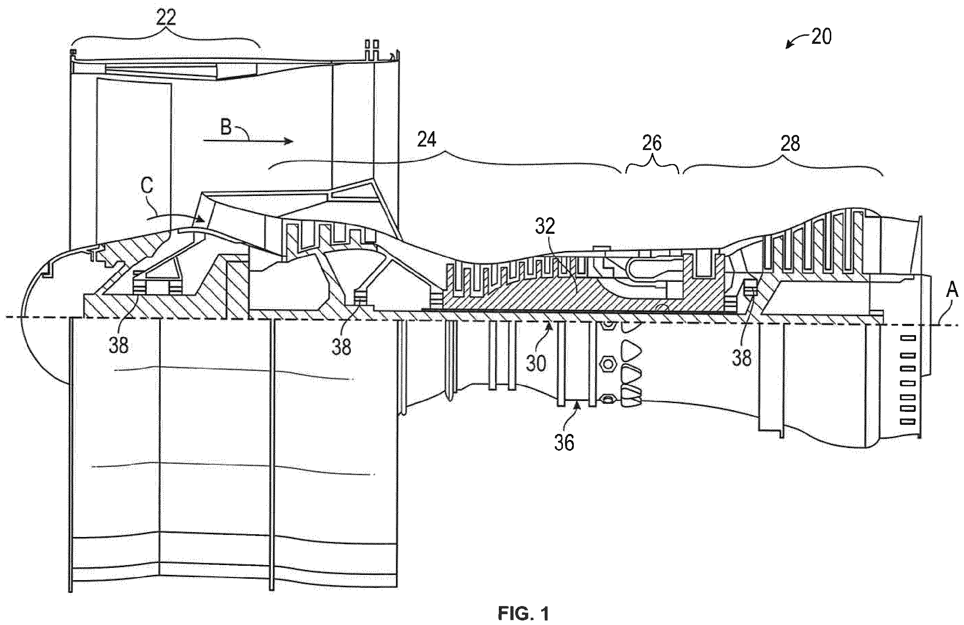

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8Mach and about 35,000 feet (10,688 meters). The flight condition of 0.8 Mach and 35,000 ft (10,688 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}. The "Low corrected fan tip speed" as disclosed herein according to one non-limiting embodiment is less than about 1150 ft/second (350.5 m/sec).In a turbofan engine, lighter components generally lead to more efficient performance. If less energy is expended moving internal engine parts, more energy is available for useful work. At the same time, the components themselves must be strong enough to withstand forces typical for the operating environment and performance envelope.

In order to reduce weight, the fan blades in some gas turbine engines may be may be made out of aluminum, and to protect the leading edge from erosion, a titanium sheath is attached. As discussed above it is desirable to maintain isolation between galvanically incompatible materials of the fan blade and more particularly, it is desirable to prevent the blade from becoming the anode in the galvanic couple and thus, prevent galvanic corrosion of the aluminum blade and inhibit other forms of corrosion. Although aluminum and titanium are disclosed other equivalent materials are completed to be within the scope of the present disclosure.

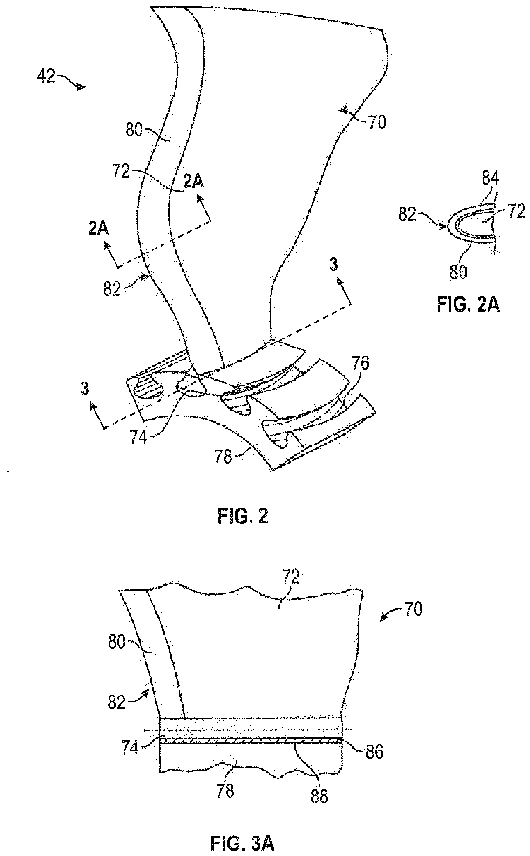

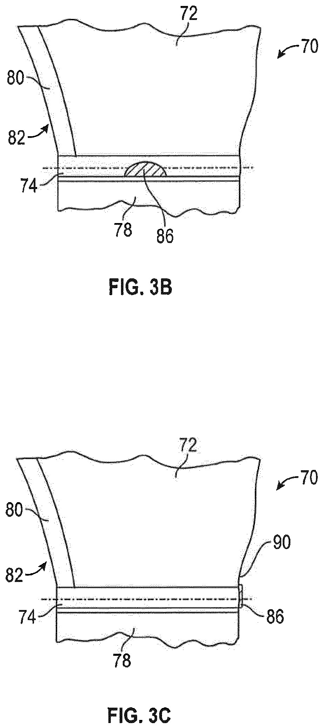

Referring now to FIGS. 2, 2A and 3, a fan blade 70 of the fan 42 of the engine 20 is illustrated. The fan blade 70 also includes an airfoil 72 and a root or root portion 74. The root or root portion 74 is received within a slot or cavity 76 of a rotor or rotor disk 78. Here root 74 is shown as a "dovetail" root; however other configurations are considered to be within the scope of the present disclosure.

The fan blade 70 may be solid or hollow. In the event the fan blade is hollow it will have at least one internal cavity (not shown) that is enclosed by a cover or shroud.

A protective sheath 80 is disposed on a leading edge 82 of the fan blade 70. In one embodiment, the airfoil 72 may be made from an aluminum alloy material and the protective sheath 80 is formed from a titanium alloy. As mentioned above and since aluminum and titanium are galvanically incompatible a non-conductive material or insulator 84 is applied between the surface of the airfoil 72 and the protective sheath 80 to electrically isolate the two materials. In other words, the non-conductive material 84 electrically isolates the protective sheath 80 from the airfoil 72. There are many materials capable of electrically isolating the sheath 80 and the airfoil 72 some non-limiting examples include: adhesives, an epoxy adhesive, urethane; and equivalents thereof each of which are contemplated to be within the scope of the various embodiments of the present disclosure.

Referring now to FIGS. 3A-3C, the fan blade 70 is provided with a sacrificial anode 86 to divert corrosion away from the blade itself. In accordance with an exemplary embodiment, the sacrificial anode is formed from a piece of a material less noble than the aluminum blade and is trapped in the blade attachment, and in intimate electrical contact with the aluminum of the fan blade 70. In one embodiment, the sacrificial anode 86 is made from zinc or magnesium. Of course, other equivalent materials less noble than that of the airfoil 72 are contemplated to be within the scope of the present disclosure.

Thus, if the sheath-to-blade electrical isolation is defeated (e.g., non-conductive material 84), any corrosion would occur first on the least noble element in the system, which would be the non-structural zinc or magnesium piece or sacrificial anode 86. If these sacrificial anode(s) 86 are corroded away, the sacrificial pieces would also be easily identified and easily replaceable during engine overhaul. For example and as will be discussed herein the sacrificial anode(s) 86 may be located in areas that are easily viewable during service of the fan 42 of the gas turbine engine 20.

In one embodiment and referring now to at least FIG. 3A, the sacrificial anode 86 may comprise a portion of an under root spacer 88 used to secure the root 74 of the fan blade 70 to the slot 76 of the disk 78. In yet another embodiment and referring now to at least FIG. 3B, the sacrificial anode 86 may be secured to side portion of the root 74 of the fan blade 70. Although illustrated as a half circle in FIG. 3B the sacrificial anode 86 may have any configuration. Still further and referring now to FIG. 3C the sacrificial anode 86 may be secured to end portion 90 of the root 74 of the fan blade 70. Although illustrated as being located on only one end of the root 74, the sacrificial anode 86 may be located on the opposite end or both ends of the root 74. Moreover, it may be desirable to locate the sacrificial anode 86 in an easily accessible location so that it can be inspected and if necessary, removed. Still further and in accordance with various embodiments of the present disclosure, the sacrificial anode 86 may be located in any combination of the locations illustrated in FIGS. 3A-3C as well as other locations that are not specifically illustrated in the attached FIGS. and would still provide the desired performance including but not limited to an embodiment where multiple sacrificial anodes 86 are located on the fan blade 70.

It is understood that while only a single blade 70 is illustrated in FIG. 2 it is, of course, understood that the fan 42 includes a plurality of fan blades 70 secured to the disk 78 and each of these fan blades may have the sacrificial anode 86 in accordance with various embodiments of the present disclosure.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A fan blade (70) for a gas turbine engine (20), comprising:
a root (74);
an airfoil (72) formed from a first material;
a protective sheath (80) disposed on a leading edge of the airfoil, the protective sheath being formed from a second material, the first material being galvanically incompatible with the second material and the first material being less noble than the second material;
a non-conductive material (84) disposed between the protective sheath and the airfoil so that they are electrically isolated from each other; and
a sacrificial anode (86) in contact with the blade, wherein the sacrificial anode is formed from a third material that is less noble than the first material such that it will corrode before the first material if the non-conductive material disposed between the protective sheath and the airfoil is compromised and the first material and the second material are no longer electrically isolated from each other; and **characterised in that**
the sacrificial anode (86) is secured to the root (74) of the blade; or
the sacrificial anode (86) is secured to an end portion (90) of the root of the blade; or
the sacrificial anode (86) is secured to a side portion of the root of the blade.

2. The blade as in claim 1, wherein the first material is aluminum.

3. The blade as in claim 1 or 2, wherein the second material is titanium.

4. The blade as in any preceding claim, wherein the third material is zinc or magnesium.

5. The blade as in claim 1, wherein the first material is aluminum, the second material is titanium and the third material is zinc, and optionally wherein the non-conductive material is an epoxy adhesive.

6. The blade as in claim 1, wherein the first material is aluminum, the second material is titanium and the third material is magnesium, and optionally wherein the non-conductive material is an epoxy adhesive.

7. The blade as in claim 1, wherein the first material is aluminum, the second material is titanium and the third material is magnesium.

8. A gas turbine engine, comprising:
a disk;
a plurality of blades secured to the disk, each of the blades being a blade according to any preceding claim and having:
a root.

9. A method of protecting a fan blade (70) of a gas turbine engine (20) from corrosion, the fan blade having a root (74), the method comprising:
forming an airfoil (72) formed from a first material;
locating a protective sheath (80) disposed on a leading edge of the airfoil, the protective sheath being formed from a second material, the first material being galvanically incompatible with the second material and the first material being less noble than the second material;
electrically isolating the protective sheath from the airfoil with a non-conductive material (84) disposed between the protective sheath and the airfoil; and placing a sacrificial anode (86) in contact with the blade, wherein the sacrificial anode is formed from a third material that is less noble than the first material such that it will corrode before the first material if the non-conductive material disposed between the protective sheath and the airfoil is compromised and the first material and the second material are no longer electrically isolated from each other; the method **characterized by**
securing the sacrificial anode (86) to the root (74) of the blade; or
securing the sacrificial anode (86) to an end portion (90) of the root of the blade; or
securing the sacrificial anode (86) to a side portion of the root of the blade.

## Patentansprüche

1. Gebläseschaufel (70) für ein Gasturbinentriebwerk (20), die Folgendes umfasst:
eine Wurzel (74);
ein Schaufelprofil (72), das aus einem ersten Material gebildet ist;
einen Schutzmantel (80), der auf einer Vorderkante des Schaufelprofils angeordnet ist, wobei der Schutzmantel aus einem zweiten Material gebildet ist, wobei das erste Material galvanisch inkompatibel mit dem zweiten Material ist und wobei das erste Material unedler ist als das zweite Material;
ein nicht leitfähiges Material (84), das zwischen dem Schutzmantel und dem Schaufelprofil angeordnet ist, so dass diese elektrisch voneinander isoliert sind; und
eine Opferanode (86) in Kontakt mit der Schaufel, wobei die Opferanode aus einem dritten Material gebildet ist, dass unedler ist als der erste Material, sodass es vor dem ersten Material korrodieren wird, falls das zwischen dem Schutzmantel und dem Schaufelprofil angeordnete, nicht leitfähige Material beeinträchtigt ist und falls das erste Material und das zweite Material nicht länger elektrisch voneinander isoliert sind; **dadurch gekennzeichnet, dass**
die Opferanode (86) an der Wurzel (74) der Schaufel befestigt ist; oder
die Opferanode (86) an einem Endabschnitt (90) der Wurzel der Schaufel befestigt ist; oder
die Opferanode (86) an einem Seitenabschnitt der Wurzel der Schaufel befestigt ist.

2. Schaufel nach Anspruch 1, wobei das erste Material Aluminium ist.

3. Schaufel nach Anspruch 1 oder 2, wobei das zweite Material Titan ist.

4. Schaufel nach einem der vorhergehenden Ansprüche, wobei das dritte Material Zink oder Magnesium ist.

5. Schaufel nach Anspruch 1, wobei das erste Material Aluminium ist, das zweite Material Titan ist und das dritte Material Zink ist und wobei das nicht leitfähige Material optional ein Epoxidklebstoff ist.

6. Schaufel nach Anspruch 1, wobei das erste Material Aluminium ist, das zweite Material Titan ist und das dritte Material Magnesium ist und wobei das nicht leitfähige Material optional ein Epoxidklebstoff ist.

7. Schaufel nach Anspruch 1, wobei das erste Material Aluminium ist, das zweite Material Titan ist und das dritte Material Magnesium ist.

8. Gasturbinentriebwerk, das Folgendes umfasst:
eine Scheibe;
eine Vielzahl an Schaufeln, die an der Scheibe befestigt sind, wobei jede der Schaufeln eine Schaufel nach einem der vorhergehenden Ansprüche ist und Folgendes aufweist:
eine Wurzel.

9. Verfahren zum Schützen einer Gebläseschaufel (70) eines Gasturbinentriebwerks (20) vor Korrosion, wobei die Gebläseschaufel eine Wurzel (74) aufweist, wobei das Verfahren Folgendes umfasst:
Bilden eines Schaufelprofils (72), das aus einem ersten Material gebildet ist;
Lokalisieren eines Schutzmantels (80), der auf einer Vorderkante des Schaufelprofils angeordnet ist, wobei der Schutzmantel aus einem zweiten Material gebildet ist, wobei das erste Material galvanisch inkompatibel mit dem zweiten Material ist und wobei das erste Material unedler ist als das zweite Material;
elektrisches Isolieren des Schutzmantels von dem Schaufelprofil mit einem nicht leitfähigen Material (84), das zwischen dem Schutzmantel und dem Schaufelprofil angeordnet ist, so dass diese elektrisch voneinander isoliert sind; und
Platzieren einer Opferanode (86) in Kontakt mit der Schaufel, wobei die Opferanode aus einem dritten Material gebildet ist, dass unedler ist als der erste Material, sodass es vor dem ersten Material korrodieren wird, falls das zwischen dem Schutzmantel und dem Schaufelprofil angeordnete, nicht leitfähige Material beeinträchtigt ist und falls das erste Material und das zweite Material nicht länger elektrisch voneinander isoliert sind; wobei das Verfahren durch Folgendes gekennzeichnet ist:
das Befestigen der Opferanode (86) an der Wurzel (74) der Schaufel; oder
das Befestigen der Opferanode (86) an einem Endabschnitt (90) der Wurzel der Laufschaufel; oder
das Befestigen der Opferanode (86) an einem Seitenabschnitt der Wurzel der Schaufel.

## Revendications

1. Aube de soufflante (70) pour un moteur à turbine à gaz (20), comprenant :
une racine (74) ;
un profil aérodynamique (72) formé d'un premier matériau ;
une gaine de protection (80) disposée sur un bord d'attaque du profil aérodynamique, la gaine de protection étant formée d'un deuxième matériau, le premier matériau étant galvaniquement incompatible avec le deuxième matériau et le premier matériau étant moins noble que le deuxième matériau ;
un matériau non conducteur (84) disposé entre la gaine de protection et le profil aérodynamique de sorte qu'ils sont électriquement isolés l'un de l'autre ; et
une anode sacrificielle (86) en contact avec l'aube, dans laquelle l'anode sacrificielle est formée d'un troisième matériau moins noble que le premier matériau de sorte qu'il se corrode avant le premier matériau si le matériau non conducteur disposé entre la gaine de protection et le profil aérodynamique est compromis et le premier matériau et le deuxième matériau ne sont plus isolés électriquement l'un de l'autre ; et **caractérisée en ce que**
l'anode sacrificielle (86) est fixée à la racine (74) de l'aube ; ou
l'anode sacrificielle (86) est fixée à une partie d'extrémité (90) de la racine de l'aube ; ou
l'anode sacrificielle (86) est fixée à une partie latérale de la racine de l'aube.

2. Aube selon la revendication 1, dans laquelle le premier matériau est de l'aluminium.

3. Aube selon la revendication 1 ou 2, dans laquelle le deuxième matériau est du titane.

4. Aube selon une quelconque revendication précédente, dans laquelle le troisième matériau est du zinc ou du magnésium.

5. Aube selon la revendication 1, dans laquelle le premier matériau est de l'aluminium, le deuxième matériau est du titane et le troisième matériau est du zinc, et éventuellement dans laquelle le matériau non conducteur est un adhésif époxy.

6. Aube selon la revendication 1, dans laquelle le premier matériau est de l'aluminium, le deuxième matériau est du titane et le troisième matériau est du magnésium, et éventuellement dans laquelle le matériau non conducteur est un adhésif époxy.

7. Aube selon la revendication 1, dans laquelle le premier matériau est de l'aluminium, le deuxième matériau est du titane et le troisième matériau est du magnésium.

8. Moteur à turbine à gaz, comprenant :
un disque ;
une pluralité d'aubes fixées au disque, chacune des aubes étant une aube selon une quelconque revendication précédente et ayant :
une racine.

9. Procédé de protection d'une aube de soufflante (70) d'un moteur à turbine à gaz (20) contre la corrosion, l'aube de soufflante ayant une racine (74), le procédé comprenant :
la formation d'un profil aérodynamique (72) formé d'un premier matériau ;
la localisation d'une gaine de protection (80) disposée sur un bord d'attaque du profil aérodynamique, la gaine de protection étant formée d'un deuxième matériau, le premier matériau étant galvaniquement incompatible avec le deuxième matériau et le premier matériau étant moins noble que le deuxième matériau ;
l'isolation électrique de la gaine de protection du profil aérodynamique avec un matériau non conducteur (84) disposé entre la gaine de protection et le profil aérodynamique ; et
le placement d'une anode sacrificielle (86) en contact avec l'aube, dans lequel l'anode sacrificielle est formée d'un troisième matériau moins noble que le premier matériau de sorte qu'il se corrode avant le premier matériau si le matériau non conducteur disposé entre la gaine de protection et le profil aérodynamique est compromis et le premier matériau et le deuxième matériau ne sont plus isolés électriquement l'un de l'autre ; le procédé étant **caractérisé par**
la fixation de l'anode sacrificielle (86) à la racine (74) de l'aube ; ou
la fixation de l'anode sacrificielle (86) à une partie d'extrémité (90) de la racine de l'aube ; ou
la fixation de l'anode sacrificielle (86) à une partie latérale de la racine de l'aube.
